## Europäisches Patentamt

## European Patent Office

## Office européen des brevets

(11) Publication number: **0 129 848**
**B1**

# EUROPEAN PATENT SPECIFICATION

(45) Date of publication of patent specification: **04.11.87**

(51) Int. Cl.⁴: **G 21 C 19/34, B 09 B 3/00**

(21) Application number: **84107106.1**

(22) Date of filing: **20.06.84**

(54) A method for reprocessing of ceramic nuclear fuel.

(30) Priority: **23.06.83 JP 113286/83**

(43) Date of publication of application:
**02.01.85 Bulletin 85/01**

(45) Publication of the grant of the patent:
**04.11.87 Bulletin 87/45**

(84) Designated Contracting States:
**DE FR GB IT**

(56) References cited:
**BE-A- 682 592**
**DE-A-3 008 991**
**FR-A-1 552 176**
**GB-A-2 056 425**
**GB-A-2 067 004**

(73) Proprietor: **HITACHI, LTD.**
**6, Kanda Surugadai 4-chome Chiyoda-ku
Tokyo 100 (JP)**

(72) Inventor: **Hirose, Yasuo**
**1-26-6, Nishinarusawa-cho
Hitachi-shi Ibaraki-ken (JP)**

(74) Representative: **Patentanwälte Beetz sen. -
Beetz jun. Timpe - Siegfried - Schmitt-Fumian
Steinsdorfstrasse 10
D-8000 München 22 (DE)**

**Description**

A method of reprocessing irradiated rod-shaped ceramic nuclear fuel elements.

The present invention relates to reprocessing of irradiated rod shaped ceramic nuclear fuel elements, more specifically to reprocessing of enriched uranium or plutonium fuel elements after the nuclear fission reaction in power reactors, which were fabricated by sintering powered ceramic nuclear fuel to form pellets and cladding the pellets with stainless steel or zircalloy, by steps including the mechanically shearing or sawing of the element into chips having a few centimeters in length and subsequently dissolving the content of said chips in an acid.

The process in common use for the reprocessing of such a used ceramic nuclear fuel element, is for instance, disclosed in Chapter 10, Fuel Reprocessing; Paragraph 4, The Purex Process; of "Nuclear Chemical Engineering" published by McGraw-Hill Book Company, U.S.A., 1981.

Used ceramic nuclear fuel elements which have just been removed from reactor core contain large quantities of radio-active nuclides, having short half-live-time-values, and generate a great quantity of decay heat. The fuel elements are therefore cooled for an appropriate period before being reprocessed.

In the reprocessing of the used ceramic nuclear fuel elements the first stage is called a mechanical head-end process.

The fuel assemblies or elements are sheared or sawed by a chopper which is usually hydraulically driven, by and between fixed and movable blades, into chips having a length of a few centimeters. The ceramic fuel pellets in metal cladding tubes that have been subjected to the fission reaction in the heat-generating reactor have been cracked by thermal impacts and stresses, and are usually divided into smaller blocks and fragments. The chopper exerts shear forces normal to the longitudinal axes of the metal tubes, thereby chopping both the tubes and the sintered ceramic fragments therein, moves the fuel elements, and forwards the tubes after every chop. This procedure is repeated until the elements have been divided into chips of substantially the same length.

The metal tubes handled in this step initially had a fairly large ductility before being charged into the reactor, but have been embrittled by neutron radiation in the reactor. Hence their ductility is very low, despite their increased strength. They are therefore not deformed apparently by the chopping, but the portions thereof subjected to the shear stresses are plastically deformed somewhat, with the consequence that a part of the ceramic fuel material within the metal cladding tubes falls off as fragments from the chips during the chopping.

Next, the chips and the fragments of ceramic fuel elements thus formed are transferred together to a subsequent step in which they are dissolved in an acid. They are placed in a bucket which is provided with several holes for the passage of nitric acid, and submerged into a solution tank filled with the acid, so that the fuel is dissolved therein.

In order to accelerate the dissolution with nitric acid, it is standard to increase the concentration of the acid, to make the acid to flow, or to take any other appropriate measure to ensure an adequate capacity of the dissolution equipment.

The nuclear fuel solution is usually separated into fissionable fuels, such as uranium and plutonium, by a chemical treatment called the Purex process, and then the separated materials are post-treated as appropriate for storage or reuse.

In the dissolution reaction of the ceramic fuel in the dissolution step of the reprocessing, it can be said that the rate at which the fuel fragments come in contact with nitric acid governs their dissolution rate. Considering the dissolution process from this viewpoint, it appears desirable that the inflow due to the diffusion of nitric acid into the metal tubes, the outflow due to the diffusion of the solution, and the surface area of the fuel pieces in the cladding wetted by the acid are as large as possible.

However, when the chips, formed in the first step of reprocessing by the operation of the chopper, and the fragments secondarily produced during the chopping, are both treated by dissolution, conditions that depend upon the characteristics of the chopper employed are important rate-controlling factors for the dissolution reaction. Any substances left undissolved would, of course, seriously hamper the further progress of the process.

It is, therefore, the object of the present invention to provide a method of reprocessing irradiated rod-shaped ceramic nuclear fuel elements whereby the progress of the dissolution reaction in the step of dissolving chips and fragments is promoted, and economical and technical advantages with a substantial increase in treatment capacity of the dissolution equipment are obtained by facilitating and speeding up the dissolution.

In order to achieve the above-identified object, according to the present invention before dissolving the content of said chips, said used ceramic nuclear fuel elements or chips are diametrically compressed, whereby used ceramic nuclear fuel coverered by metal cladding tube is crushed into smaller fragments to improve the permeability of nitric acid as the dissolver solution into the metal cladding tube to increase the wetted surface area of the ceramic nuclear fuel, and thus promote the contact between the ceramic fuel piece in the tube and the nitric acid to provide an increased rate of dissolution.

While it is desirable for the acceleration of the dissolution reaction in the dissolution step due to the invention to be effected by compressive deformation of the chips, the reaction-acceleration effect will not always increase in direct proportion to the degree of compressive deformation, a tendency toward

2

saturation of the effect beyond a certain degree of compression has been observed. If the degree of compression is raised, the equipment load must be increased exponentially. For practical purposes, therefore, it is advisable to confine the compressive deformation in diameter of the chips to within a percentage strain range of between 10% to 50%.

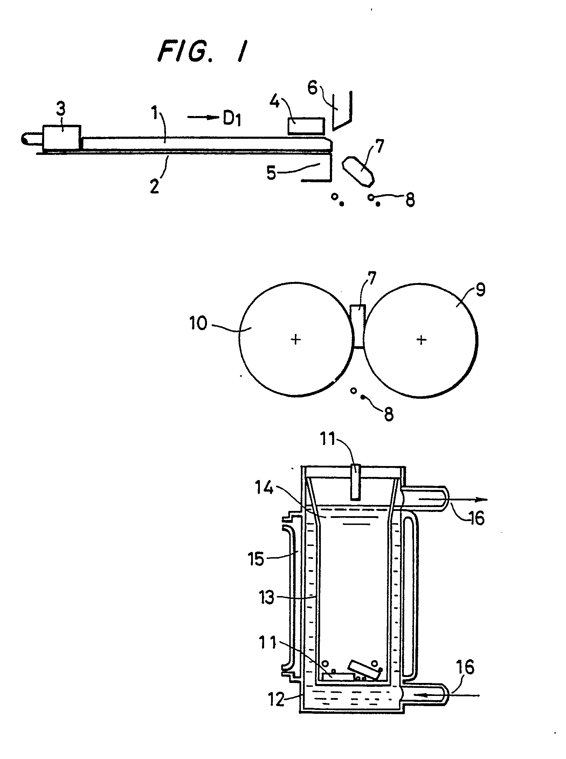

Figure 1 is a schematic view of an embodiment of the reprocessing arrangements incorporating the process of the present invention.

Figure 1 illustrates a part of a reprocessing plant making use of the process of the present invention. In the figure, 1 is a fuel element held on a bed 2 and forward intermittingly (in the direction of the arrow $D_1$) a predetermined distance by a pusher 3. Chopping is done while the fuel element 1 is pressed by presser 4 against the bed, by pushing a movable blade 6 toward, and along, a fixed blade 5.

The shorter the chips 7 thus obtained, the easier will be the dissolution of the uranium dioxide out of the fuel element. However, shorter chips necessitate a higher chopping frequency and reduce the capacity of the equipment. In addition, the chopping produces a large quantity of fine fragments of the cladding material, which necessitates precautions against fire hazards, particularly in case of Zircaloy claddings. In consideration of this, the chips produced according to the present invention are of an appropriate length (usually a few centimeters).

The chips are deformed during the chopping, so that each chip is somewhat battered or squeezed at both ends. This is particularly true with chips of fuel elements which have not been fully exposed to neutron radiation in the reactor, because the cladding thereof is still ductile enough to be deformed substantially. In extreme cases the deformation can reduce the cross-sectional areas of the ends of the chips to such an extent that the nitric acid cannot enter the chips easily to dissolve the uranium dioxide therein or dissolved solution can not be replaced by the fresh nitric acid.

The chopping allows the portions of the uranium dioxide close to the openings of each chip 7 to fall out in form of smaller fragments 8.

The chips 7 and the fragments 8 fall together between a pair of compression rolls 9, 10 positioned immediately beneath the chopping zone. The spacing between the pair of compression rolls determines the amount of compression of the fuel element 1. Most of the fragments 8 simply pass between the compression rolls 9, 10, whereas fragments larger than the roll spacing are, of course, crushed thereby. As shown, the chips 7 are squeezed between the pair of compression rolls and compressed diametrically and thus deformed. The direction of this squeezing does not have any special meaning on the effect achieved by the process of the present invention.

The diametrically compressed chips 11 fall, together with the fragments 8 of uranium dioxide that have passed between the compression rolls 9, 10, into a perforated basket 13 in a dissolution vessel 12 located immediately below the rolls. This dissolution vessel 12 is filled with nitric acid 14 and is preferably heated with pressurized steam supplied to a heating jacket 15. The uranium dioxide in the chips 11 and the fragments 8 are dissolved when they come into contact with the nitric acid. Agitation of the solution so as to promote the dissolution reaction in the arrangement shown is done by circulating nitric acid through a path indicated by the numerals 16.

The progress of the dissolution is judged by the quantity of nitrogen oxide gas resulting from the reaction of the uranium dioxide with the nitric acid. It may ultimately be determined by the presence or absence of uranium dioxide left inside the chips within the perforated basket 13.

Embodiments of the present invention using this reprocessing arrangement will now be described.

In a first embodiment as the fuel elements treated were those used in a boiling-water type of a light-water reactor. Each element was fabricated by sintering uranium dioxide to 95% of its theoretical density, grinding the sintered product to provide a tight clearance of 0.02 cm from the inner diameter of a Zircaloy tube with an outer diameter of about 1.25 cm and a length of 4.1 m, and sealing the uranium dioxide into the tube. The elements had been used in a reaction for 4 years, generating heat equivalent to 27,000 MWD per ton of uranium, and were then discharged from the reactor and cooled for 2 years.

The sintered uranium dioxide pellets had been in close contact with the surrounding surfaces of the Zircaloy tubes during operation in the reactor, with some reaction forces acting on each other. After cooling, the sintered pellets of uranium dioxide shrank so that there was a space of 0.02 cm between their outer diameter and the inner diameter of the Zircaloy tubes.

Each fuel element was cut by the chopper of Figure 1 into chips 5 cm in length. During the chopping, an average of 15% of uranium dioxide fragments dropped off the chips. Both ends of each chip had deformed openings which were elliptical in cross section with the minor axis measuring 75% of the major axis.

The chips were inserted longitudinally into a compressor consisting of a pair of compression rolls set 1 cm apart, and were subjected to compressive deformation. The chips were thus deformed elliptically to a major axis of 1.4 cm and a minor axis of 1.1 cm, with a release of an additional 15%, on average, of uranium dioxide fragments from the chip openings.

The chips and fragments were dissolved in 6 mol nitric acid boiling in a solution tank. Complete dissolution of the uranium dioxide fragments within the chips required a period of 3 hours. The concentration of the nitric acid at the end of the dissolution was 3 mols.

For comparison purposes, chips not compressively deformed by the pair of compression rolls were dissolved under the same conditions as above in nitric acid. Complete dissolution thereof took 6 hours.

Possible causes for the higher dissolution rate of the compressively deformed chips are, aside from the

3

higher percentage of released uranium dioxide fragments, presumably the noticeable shift of the particle size of the uranium dioxide fragments left in the Zircaloy tubes to a smaller range, and also the formation of nitric acid flow passages that establish communication between both end openings of the individual chips. Since the uranium dioxide fragments released from the chips dissolve fast, the overall rate of dissolution is controlled by the dissolution of the uranium dioxide fragments within the chips.

The dissolution step in reprocessing includes cleaning of the tubes with nitric acid and water which are not soluble in acid, and therefore this reduction in the dissolution time cannot be directly interpreted as an improvement in the capacity of the dissolution vessel. However, in this example, a dissolution step that usually takes 10 hours per cycle was shortened to 7 hours, to provide a 30% increase in efficiency.

An additional advantage worth to note in this embodiment was that the shorter period of dissolution brought about a substantial saving (about half in this embodiment) of the time during which the dissolution equipment would normally be in contact with the hot nitric acid. Such a shortened contact time would increase the corrosion resistance of the equipment by 50%, prolong the service life of the equipment, improve the overall equipment reliability, and increase the operating efficiency.

To ascertain the relationship between the degree of compressive deformation due to the deformation treatment and the acceleration of the dissolution reaction, this procedure was repeated while changing only the spacing between the compression rolls. The results are tabulated below.

TABLE I

| Spacing between rolls | | | Diameter of chips after compression | | Quantity of UO$_2$ released | |
|---|---|---|---|---|---|---|
| (cm) | (%) | Compression rate (%) | (cm) | (%) | (cm) | (%) |
| 1.2 | 96 | 4 | 1.25 | 100 | 2.3 | 5 |
| 1.0 | 80 | 20 | 1.1 | 88 | 6.9 | 15 |
| 0.8 | 64 | 36 | 0.9 | 72 | 9.2 | 20 |
| 0.6 | 48* | 52 | 0.7 | 56 | 10.0 | 22 |

(* Following an initial compression with a roll spacing of 0.8 cm, the chips were recommended.)

Although the test results did not clarify the stresses eventually imparted to the chips by the roll type compressor, chips that had been deformed to such an extent that their diameters were reduced to about the roll spacing were observed to have undergone backward deformation of about 0.1 cm.

It was found that the weight of uranium dioxide fragments that fell off the chips during the compressive deformation by the rolls remarkably increased when the diametrical compression rate exceeded 10%, but this tendency saturated as the compression rate approached 50%.

It was also found to be difficult to perform a compression of over 35% by a single run through the compressor. The rate of crushing the uranium dioxide within the chips is presumed to be correlated with the weight of uranium dioxide that falls off the chips.

The first reason why the uranium dioxide fragments begin to fall off the chips remarkably when the diametrical compression rate exceeds 10%, is that the existence of a clearance between the uranium dioxide pellet and the metal tube, which is necessary when the ceramic nuclear fuel is fabricated by insertion of the pellets together with helium into the metal tube, and also the clearance is necessary in certain degree based on difference of thermal expansion between the uranium dioxide pellet and the metal tube.

The second reason why the uranium dioxide fragments begin to fall off the chips remarkably as mentioned above when the diametric compression rate exceeds 10%, is that the existence of inside cracks in the uranium dioxide pellet inserted into the metal tube which were generated during the use of it under the high thermal stress, because the uranium dioxide reaches high centerline temperature compared with the surface temperature of the cladding, during a fission reaction.

The reason why the uranium dioxide fragments cease to fall off the chips during the compression deformation when the diametrical compression rate approaches 50%, is that the uranium dioxide fragments are compressed into one block instead of free flowed powder.

From the above, it appears to be desirable that the compression deformation of the chips in accordance with the process of the present invention is carried out with a compression rate between 10 to 50% of the initial diameter.

4

**Modification 1:**

While the compression deformation of the chips in the preceding embodiment was done by a pair of compression rolls provided with plain surfaces, this embodiment used rolls provided with grooves parallel to the axis on the surface of rolls thereof, to provide a better bite of the chips. These rolls were designed to rotate in opposite direction with their grooves registering well.

Typically, in this example, chips of nuclear fuel elements 1.25 cm in diameter were handled using a pair of compression rolls with grooves 0.8 mm deep and 8 mm wide. The bottom of each groove compressed a chip diametrically and continued to apply a compressive force until the radius of curvature at the contact point between the groove bottom and the chip increased from 6.25 to 8.13 mm. The pitch of the grooves was 20 mm.

The shape and dimensions of the grooves are not limited to those stated above.

This modification enabled the rolls to grip the chips better and perform a better compressive deformation than that of the rolls of the preceding embodiment.

**Modification 2:**

For the diametrical compression of nuclear fuel elements, a compressor-crusher which is usually called a jaw crusher, and which comprises a fixed jaw-like member and a movable member at a certain angle thereto which is capable of reciprocating forward and backward, can be utilized. The task can also be fulfilled by the use of a compression press provided with a piston-driven mechanically or by hydraulic pressure.

When these alternatives were employed, compressibilities and desirable effects comparable to those of the previous embodiments could be obtained.

**Modification 3:**

Although the embodiment and modifications of the present invention described above were all directed toward the compression deformation of chips, the purpose of the present process can also be achieved by imparting a compressive deformation to the fuel elements prior to their chopping. Inasmuch as the compressive deformation was intended to ensure a thorough contact of the sintered ceramic bodies in the dissolution step, fine crushing of the sintered bodies was found to be effective whether it preceded or followed the chopping.

For the compressive deformation of the nuclear fuel elements in this embodiment, any of the equipments described above for the compressive deformation of chips, such as a pair of compression rolls, could be adopted.

In this example, the sintered ceramic bodies inside the fuel elements were finely crushed before being chopped up. This reduced the reaction force the chopper received during each chop, and hence provided the advantage of a remarkably extended blade life.

According to this invention, a compressive deformation of used ceramic nuclear fuel element, as such or in a chopped form, is effected prior to their dissolution. The sintered ceramic body within the chop is thus finely crushed before being dissolved, and some of the fine fragments fall off them, making the subsequent dissolution easy and rapid. Hence a substantial increase in the capacity of the dissolution vessel is provided. Another favorable effect achievable by the present invention is that the compressive deformation makes the configurations of the chips more uniform, and therefore makes uniform the shape and conditions of the uranium dioxide fragments within the chips that would usually vary according to their service history within the reactor of that particular ceramic nuclear fuel. This uniformity thus simplifies the dissolution operation compared with the conventional practice in which the speed of the dissolution reaction varies from batch to batch.

**Claims**

1. Method of reprocessing irradiated rod-shaped ceramic nuclear fuel elements (1), each element (1) consisting of ceramic nuclear fuel cladded in a metal tube, by mechanically shearing said element into chips (7) and dissolving the content of said chips, characterized in that before dissolving the content of said chips, the element (1) or the chips (7) are diametrically deformed by compression (9, 10).

2. Method according to claim 1, characterized in that the diametrical compressive deformation (9, 10) is accomplished in such a manner that percentage compression rate thereof is between 10% to 50%.

**Patentansprüche**

1. Verfahren zur Wiederaufbearbeitung stabförmiger, verstrahlter, keramischer Kernbrennstoffelemente (1), von denen jedes Element (1) aus keramischem Kernbrennstoff besteht, der von einem Metallrohr umhüllt ist, bei dem das Element mechanisch in Plättchen (7) geschert und der Inhalt des Plättchens ausgelöst wird, dadurch gekennzeichnet, daß vor dem Auslösen des Inhalts des Plättchens das Element (1) oder die Plättchen (7) diametral durch Kompression (9, 10) verformt werden.

2. Verfahren nach Anspruch 1, dadurch gekennzeichnet, daß die diametral erfolgende kompressive Verformung (9, 10) derart erfolgt, daß die Kompressionsrate zwischen 10 und 50% beträgt.

**0 129 848**

**Revendications**

1. Procédé de retraitement d'éléments combustibles nucléaires céramiques irradiés (1), en forme de barres, chaque élément (1) étant constitué par un combustible nucléaire céramique renfermé dans une gaine en forme de tube métallique, par un découpage mécanique dudit élément en fragments (7) et dissolution du contenu desdits fragments, caractérisé en ce qu'avant la dissolution du contenu desdits fragments, on déforme diamétralement par compression (9, 10) l'élément (1) ou les fragments (7).

2. Procédé selon la revendication 1, caractérisé en ce que la déformation diamétrale par compression (9, 10) est réalisée de telle manière que le taux de compression en pourcentage lors de la déformation est compris entre 10% et 50%.

6

## FIG. 1